# EUROPEAN PATENT SPECIFICATION

(11) **EP 0 822 533 B1**
(45) Date of publication and mention of the grant of the patent: **28.11.2001**
(21) Application number: 97305791.2
(22) Date of filing: 31.07.1997
(51) Int. Cl.: G09F 9/00, G09F 9/37, B43L 1/00

(54) **Magnetic display panel and method of making a magnetic display panel**
Magnetische Anzeigetafel und Verfahren zur Herstellung einer magnetischen Anzeigetafel
Panneau d'affichage magnétique et procédé pour la fabrication d'un panneau d'affichage magnétique

(30) Priority: 31.07.1996 JP 23241796
(43) Date of publication of application: 04.02.1998
(73) Proprietor: KABUSHIKI KAISHA PILOT, Tokyo 141 (JP)
(72) Inventor: Nojima, Teruaki, Hiratsuka-shi, Kanagawa (JP); Yamaguchi, Takao, Hiratsuka-shi, Kanagawa (JP); Tokorozawa, Sadao, Hiratsuka-shi, Kanagawa (JP)
(74) Representative: Baverstock, Michael George Douglas

(56) References cited:
- EP-A- 0 010 354
- EP-A- 0 258 791
- CH-A- 458 046
- DE-A- 2 114 620
- DE-A- 2 802 096
- DE-A- 3 022 960
- GB-A- 1 450 530

## Description

The present invention relates to a magnetic display panel made by a method as defined hereafter in the claims.

In a typical magnetic display panel utilizing magnetism to display, the panel is composed of a face substrate, a rear substrate and a honeycomb-shaped porous plate therebetween adhered by an adhesive agent, and a dispersion liquid in which magnetic particles are dispersed is filled into enclosed spaces, that is cells, in the panel, and the magnetic particles are caused to migrate from the rear substrate by the action of a magnetic pen producing a magnetic field so as to give a display.

The multiple cell structure between the substrates of the magnetic display panel is for the purpose of disposing the magnetic particles in the dispersion liquid in a uniform fashion between the substrates and to prevent an uneven distribution thereof. The thinner are the side walls separating the cells, the better is the continuous display which is obtained.

However, the use of the porous plate should desirably be omitted in order to shorten the manufacturing process and to reduce the adhering process, because the porous plate is honeycomb shaped and the honeycomb-shaped porous plate must be adhered to each face and rear substrate with an adhesive agent.

EP-A- 0 010 354 describes a magnetic panel and a magnetic display assembly incorporating such a panel which comprises a front sheet, a rear sheet and a cell wall having a U-shaped cross-section with an open angle.

DE-A-3 022 960 shows a magnetic panel in which a wall formed on a face substrate comprises an outer top portion which contacts the rear substrate or in which a wall formed on a rear substrate comprises an outer top portion which contacts the face substrate.

An object of the present invention is to provide a method of forming a magnetic display panel forming a multiple cell structure between a face substrate and a rear substrate without using a conventional honeycomb-shaped porous plate, which is capable of displaying successively and distinctly when writing on one side of the two substrates.

The present invention relates to a magnetic display panel made by the method hereafter claimed which comprises a face substrate, a rear substrate and cell walls for forming a cell. The cell walls can also be used for binding the face substrate and the rear substrate together. Further, the cell walls are used for enclosing a dispersion liquid including magnetic particles. The cell walls which have U-shaped cross sections are formed by bending and standing partially one or both of the face substrate and the rear substrate.

The clearance of said U-shaped cross section in each cell wall has an open angle of 0 to 20 degrees. The base portion clearance of said U-shaped cross section is 0.1 mm to 1.0 mm, and the top portion clearance of said U-shaped cross section is 0 to 1.0 mm. A finely rough portion may be formed on a surface of a substrate between the cell walls formed by bending the substrate. Further, a protective sheet may be disposed on the substrate which forms separate walls by bending.

In the drawings:

Fig. 1 is a plan view of a magnetic panel according to the present invention.

Fig. 2 is an enlarged sectional view of a principal portion of a magnetic panel according to the present invention.

Fig. 3 is an enlarged sectional view of a principal portion of one embodiment of a magnetic display panel according to the present invention.

Fig. 4 is an enlarged sectional view of a principal portion of another embodiment of a magnetic display panel according to the present invention.

Fig. 5 is a fragmentary plan view of a multiple cell structure used for the present invention.

Fig. 6 is a fragmentary plan view of one embodiment of a multiple cell structure used for the present invention.

Fig. 7 is a fragmentary plan view of another embodiment of a multiple cell structure used for the present invention.

Fig. 8 is a fragmentary plan view of still another embodiment of a multiple cell structure used for the present invention.

Fig. 9 is a fragmentary plan view of yet another embodiment of a multiple cell structure used for the present invention.

Fig. 10 is a diagram for providing an explanation of the open angle, the base portion clearance, and the top clearance portion of a cell wall having a U-shaped cross section used for the present invention.

Fig. 11 is a fragmentary plan view of a mold of a vacuum apparatus for a substrate used for the present invention.

Fig. 12 is a sectional view of a mold used for the present invention shown along the line 12-12 in Fig. 11.

Fig. 13 is a diagrammatic explanation of forming a substrate using a vacuum forming apparatus used for the present invention.

Fig. 14 is a diagrammatic explanation of forming by using a vacuum forming apparatus for comparison.

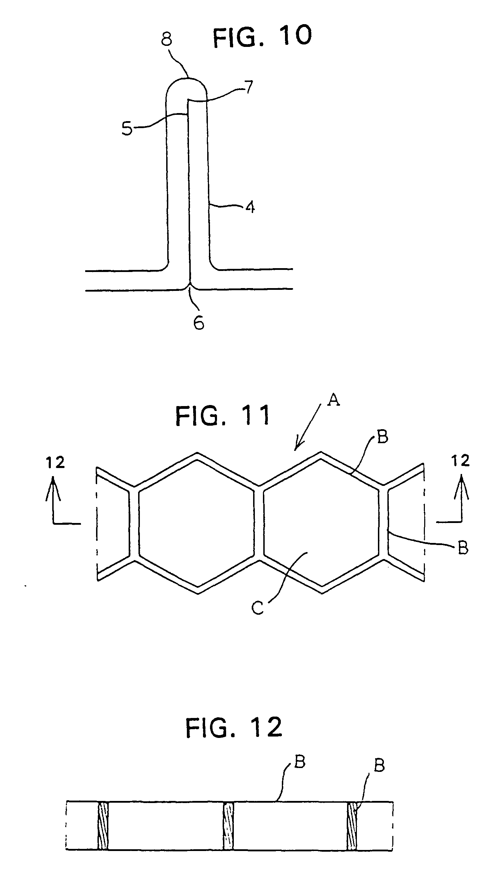

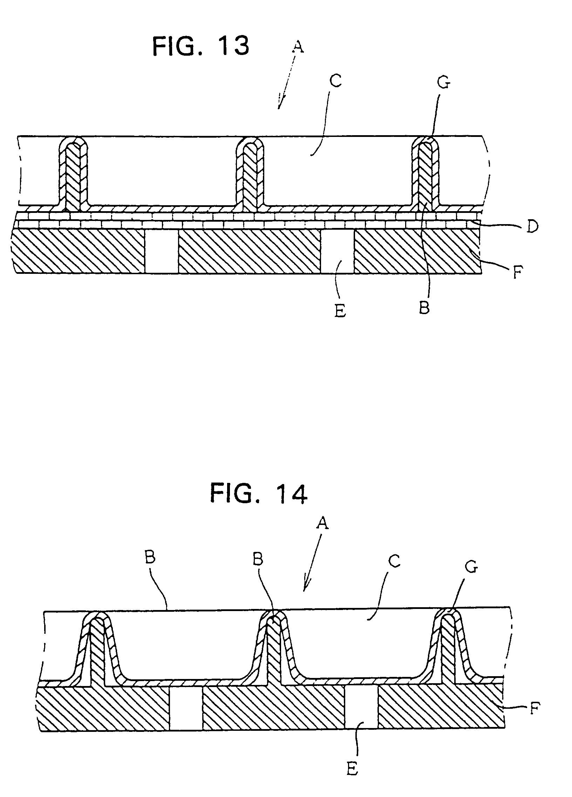

To manufacture the panel according to the present invention, a porous mold A for punching penetrating holes C except cell wall forming portions B, as shown in Fig. 11 and Fig. 12, is disposed on a vacuum plate F formed with suction holes E corresponding to each penetrating hole by interposing a ventilating member D having pores as shown in Fig. 13; a suction device (not shown) is disposed at the underside of the vacuum plate F; a synthetic resin film G is coated on the opening surface of the mold A; and vacuum forming is applied thereto.

Vacuum forming using the ventilating member D has not been known previously. If vacuum forming without using the ventilating member D is conducted, the suction holes E are covered by the synthetic resin film G as shown in Fig. 14 causing a clearance to be formed between the film and the mold. Thereby, vacuum forming is not completely conducted causing a difference between the base portion clearance and the top portion clearance, resulting in a low display ability when writing.

On the other hand, when vacuum forming using the ventilating member D, the synthetic resin film G is vacuumed via the ventilating member D so that there is no clearance between the cell wall forming portion and the synthetic resin film without covering the suction hole E with the synthetic resin film. As a result, the synthetic resin film G is adhered to the cell wall forming portion. Thereby, walls having U-shaped cross sections can bend and stand partially the substrate to approximately 90 degrees to manufacture a substrate having a small difference between the base portion clearance and the top portion clearance.

Therefore, in the magnetic display panel according to the present invention, the thickness of the cell walls having U-shaped cross sections separating the cells may be thinner, and achieve continuous display from both the substrate side with the cell walls and the other substrate side. In addition, walls having U-shaped cross sections can be bent and stood, thereby the thickness of the cells can be less so as to be capable of giving a cell volume equivalent to that of a conventional panel using a honeycomb-shaped porous plate. Therefore, a dispersion liquid including a sufficient amount of magnetic particles required to produce a display can be filled thereinto, resulting in a distinct display.

According to the present invention, the cell walls having the U-shaped cross sections are formed by bending and standing partially one or both of the face substrate and the rear substrate. However, the satisfactory result of a clear display cannot necessarily be obtained. If the clearance of the cell wall base portion is wide, the dispersion liquid including magnetic particles hardly exists therein. Thus a display from the substrate side with the cell walls can be adversely affected, and if the clearance of the top portion is too wide, a display from the other substrate side can also be adversely affected. Consequently, it is important to make the base portion and the top portion of the cell walls having the U-shaped cross sections have thin clearances in order to obtain a continuous satisfactory display from one or both of the face and rear substrates.

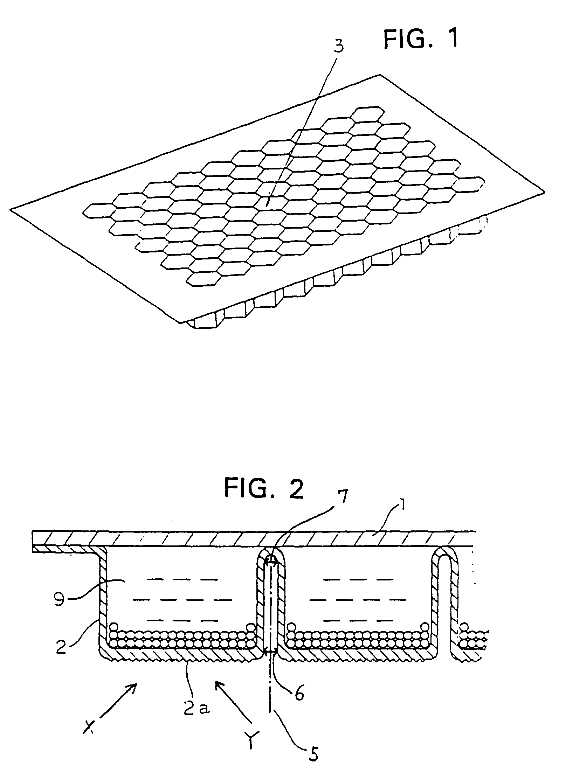

When displaying from the substrate with the cell walls, most of the display caused by the migration of the magnetic particles in the dispersion liquid is normally seen from two optic angles in the X direction and the Y direction as shown in Fig. 2. The acuter are the angles of both directions, the greater is the continuity of the display, because the magnetic particles migrated to the cell wall portions at a surface side of the substrate are visible. In fact, however, a predetermined distance between the panel and writer's eyes is needed. Therefore, the optic angle becomes obtuse when writing. If the clearance of the cell wall base portion and the open angle are outside a predetermined range, a broken line display is generated.

When displaying from the substrate which is opposed to the substrate with the cell walls, a broken line display is generated as well, if the top portion clearance is outside a predetermined range.

As a result of experiments it has been found that a distinct and continuous display is obtained at both face and rear sides of the panel when the base portion clearance is not more than 1.0 mm, preferably within 0.5 mm, the top portion clearance is not more than 1.0 mm, preferably within 0.5 mm, and the open angle is not more than 20 degrees, and the smaller are the clearances and the angle, the better is the display. The base portion clearance is 0.1 mm to 1.0 mm, the top portion clearance is 0 to 1.0 mm, and the open angle is 0 to 20 degrees. If the base portion clearance is less than 0.1 mm, it is difficult to form the cell walls.

Thus, when the cell walls having the U-shaped cross sections are formed by bending and standing partially one or both of the face substrate and the rear substrate, the open angle of the clearance in the U-shaped cross section of each cell wall is 0 to 20 degrees, the base portion clearance is 0.1 mm to 1.0 mm, the top portion clearance is 0 to 1.0 mm, a distinct continuous display is constantly obtained when writing on whichever side of the substrate.

According to one preferred embodiment of the present invention, minute rough portions are formed on a surface of the substrate between the cell walls of the substrate forming the cell walls by bending, whereby the substrate is matted. Consequently, an advantage of the present invention is that is difficult for halation to occur in the display.

According to another preferred embodiment of the present invention, a protective sheet is disposed on a surface of the substrate where the cell walls are formed by bending, thereby substrate contamination by mixing impurities between the substrate and the walls having the U-shaped cross sections can be prevented.

According to still another preferred embodiment of the present invention, outer top portions of the cell walls contacted to another substrate by bending and standing are adhered to the other substrate with an adhesive agent, thereby an adhesion processing can be conducted at half the labor and time compared to an adhesion processing comprising adhering both surfaces of two substrates having a conventional multiple cell structure.

The face substrate, the rear substrate and the protective sheet are preferably transparent, or can be semitransparent depending on applications, and various synthetic resins can be applied thereto. The protective sheet is disposed on a surface of the substrate where the cell walls are formed by bending, or can be disposed on the substrate by adhering, thermal fusion welding, or assembling separately.

The magnetic particle diameter is preferably not less than 10 microns. If the diameter is less than 10 microns, the apparent diameter is increased to not less than 10 microns by aggregating the magnetic particles in the dispersion liquid in order to give the desired result.

In the dispersion liquid including the magnetic particles, the magnetic particles are dispersed in a colored liquid composed of a coloring agent, a dispersion medium and thickening agent as desired. If a thickening agent is added, a yield value can be given to the dispersion liquid. When a panel is produced using the liquid, distinct and high contrast letters and patterns can be displayed because only magnetic particles receiving magnetism of more than the yield value migrate. The display can be retained stably for a long time and can be erased thoroughly without leaving a stain. About 10 to 40 parts by weight of the magnetic particles are mixed with 100 parts by weight of the colored liquid.

A typical thickening agent is micropowder silicic acid, but is not limited thereto. Various types of thickening agents may be used. The coloring agent is to provide a coverage and a tonality to the dispersion liquid. As the coloring agent, a white pigment, other dyestuffs or pigments may be used. As the dispersion medium, both polar solvents such as water or glycol, and nonpolar solvents such as organic solvents and oil can be used.

In the method for manufacturing the panel according to the present invention, as described above, the ventilating member D having pores is disposed at the bottom of the porous mold for punching the penetrating holes except at the cell wall forming portions. The ventilating member D is placed on the vacuum plate F having suction holes E corresponding to each penetrating hole, the suction device is disposed at the side of the vacuum plate F, the opening surface opposed to the ventilating member D of the mold is coated with the synthetic resin film softened by heat, the suction device is worked to vacuum the mold, and the synthetic resin film is adhered to the inner wall of the mold and the ventilating member D to form the panel. No air exists in the mold due to a use of the ventilating member D. Therefore, the film and the mold are adhered completely. Consequently, the base portion clearance and the top portion clearance are reduced. After cooling, air is passed to the formed panel to release it.

Minutely rough portions formed on a surface of the substrate between the cell walls are effective to cause matting. The minutely rough portions can be formed by a machining or by selecting the pores in the ventilating member D to be used under vacuum forming.

As the ventilating member D, for example woven, non-woven or a foaming element having successive vents can be used.

The dispersion liquid including magnetic particles is flowed into the substrate obtained, the other substrate is adhered to the opening surface of the first-maintained substrate with a adhesive agent, and a protective sheet is disposed, as required, to the surface of the substrate with the cell walls to manufacture the panel.

The drawings of the present invention will now be described in more detail.

Fig. 1 shows a magnetic display panel having a face substrate 1, a rear substrate 2 and a multiple cell structure 3 forming a honeycomb-shaped cell therebetween where the dispersion liquid including the magnetic particles is enclosed.

Fig. 2 shows a magnetic display panel where cell walls 4 having U-shaped cross sections are formed by bending and standing partially a rear substrate 2 to approximately 90 degrees, the open angle of each cell wall having the U-shaped cross section is 0 degrees, the base portion clearance 6 is 0.1 mm, the top portion clearance 7 is 0.1 mm, the outer top portions 8 of the cell walls in the rear substrate 2 are adhered to a face substrate 1 with an adhesive agent, and a dispersion liquid 9 including the magnetic particles is enclosed in each cell. 2a represents minutely rough portions formed on a surface portion of the substrate between the cell walls 4 of the rear substrate 2.

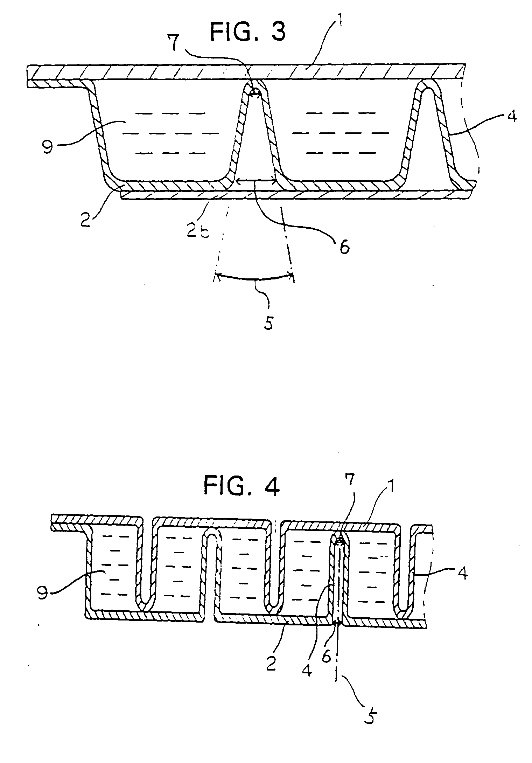

Fig. 3 shows a magnetic display panel where cell walls 4 having U-shaped cross sections are formed by bending and standing partially a rear substrate 2, the open angle 5 of each cell wall 4 having the U-shaped cross section is 20 degrees, the base portion clearance 6 is 1.0 mm, a top portion clearance 7 is 0.1 mm, the outer top portions 8 of the cell walls in the rear substrate 2 are adhered to a face substrate with an adhesive agent, and a dispersion liquid 9 including the magnetic particles is enclosed in each cell. 2b represents protective sheet disposed on the surface of the rear substrate 2.

Fig. 4 shows a magnetic display panel where cell walls 4, 4 having U-shaped cross sections are formed by bending and standing partially a rear substrate 2 to approximately 90 degrees, the open angle 5 of each cell wall 4, 4 having a U-shaped cross section is 0 degrees, the base portion clearance 6 is 0.1 mm, a top portion clearance 7 is 0.1 mm, the outer top portions 8 of the cell walls in the rear substrate 2 and outer top portions 8 of the cell walls in the face substrate 1 being adhered to the face substrate 1 and the rear substrate 2, respectively, with an adhesive agent and a dispersion liquid 9 including the magnetic particles is enclosed in each cell.

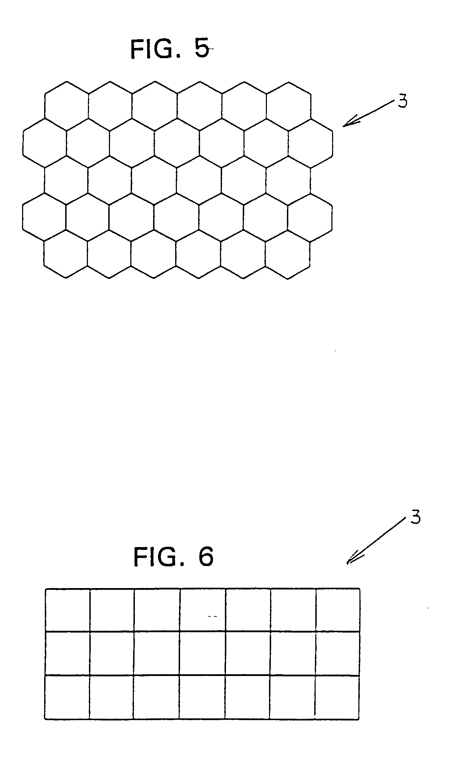

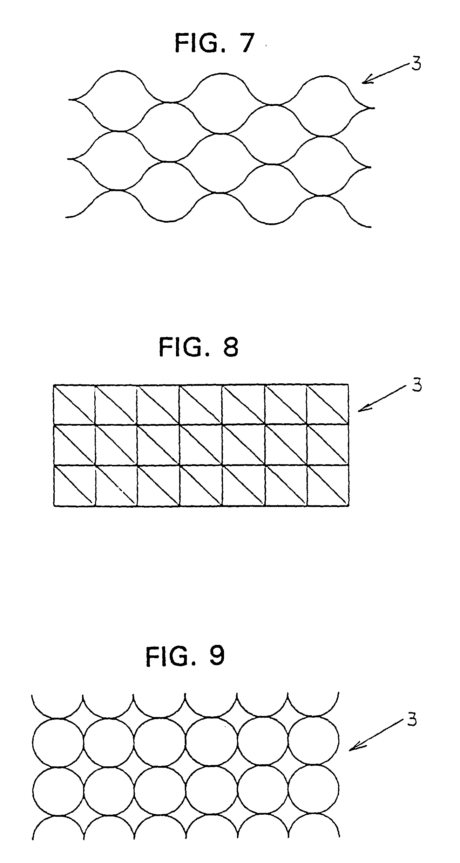

The shape of a honeycomb-like cell shown in Fig. 1 and Fig. 5 may be alternated with a rectangular form shown in Fig. 6 or with a spindle-like cell 3 so that a plurality of wave form walls are aligned and top portions of each wave form wall are fixed to the adjacent top portion of each wave form wall as shown in Fig. 7. Alternatively, the shape may be alternated with a triangular cell 3 as shown in Fig. 8 or a circular cell 3 as shown in Fig. 9.

Fig. 10 shows a substrate where a cell wall 4 having a U-shaped cross section is formed by bending and standing partially to approximately 90 degrees, the open angle 5 of each cell wall having the U-shaped cross section is 0 degrees, the base portion clearance 6 is 0.1 mm, the top portion clearance 7 is 0 mm. When forming the cell walls having the U-shaped cross section, the synthetic resin is contracted, thereby the open angle becomes 0 degrees.

Fig. 11 shows a part of a mold A. B represents a cell wall forming portion, and C represents a penetrating hole. The mold is, thus, honeycomb-shaped.

Fig. 12 is a cross sectional view along the line 12-12 of the mold shown in Fig. 11.

Fig. 13 shows that a synthetic resin film G is vacuum formed by using a vacuum forming apparatus composed of the mold A, the ventilating member D and a vacuum plate F. Suction holes E are disposed corresponding to each penetrating hole of the mold, and suction is applied through the ventilating member D. Therefore, the suction holes E are never covered by the film.

Fig. 14 shows vacuum forming without using the ventilating member D, for comparison. The suction holes E are covered by the synthetic resin formed and thereby air remains in the mold and a portion where the film and the mold are not joined is generated. As a result cell walls are formed having a large base portion clearance.

### Examples

Examples of the present invention will now be described.

### (1) Preparation of a dispersion liquid

### (1-1) Dispersion liquid A

97 parts by weight of isoparaffin solvent, 2 parts by weight of micropowder silicic acid and 1 part by weight of titanium oxide were mixed to form a white liquid. 40 parts by weight of magnetite and 25 parts by weight of a solid epoxy resin in 40% ethylmethylketone solution were then kneaded, dried and pulverized/dispersed to give black magnetic particles in the range 100 to 325 mesh. 20 parts by weight of the black magnetic particles were mixed with 100 parts by weight of the white liquid and dispersed therein to prepare a dispersion liquid.

### (1-2) Dispersion liquid B

A dispersion liquid was prepared, in the same manner as dispersion liquid A, but 12 parts by weight of the magnetic particles were mixed with 100 parts by weight of the white liquid and dispersed therein.

### (2) Production of a substrate having cell walls

### (2-1) Substrate A

A substrate made of a vinyl chloride resin was produced by vacuum forming as shown in Fig. 11. In the substrate obtained the open angle of U-shaped cross section formed by bending and standing to 90 degrees in the cell wall was 0 degrees, the base portion clearance was 0.1 mm, and the top portion clearance was 0.1 mm. The cell is honeycomb-shaped, 4 mm² in area, 1.3 mm in height and 12.5 mm³ in volume.

### (2-2) Substrate B

A substrate made of a vinyl chloride resin was produced by vacuum forming as shown in Figs. 11 to Fig. 13. In the substrates obtained the open angle of U-shaped cross section formed by bending and standing in the cell wall was 20 degrees, the base portion clearance was 1.0 mm, and the top portion clearance was 0.1 mm. The cell is honeycomb-shaped, 4 mm² in area, 1.3 mm in height and 11.0 mm³ cubic in volume.

### (2-3) Substrate C

A substrate made of a vinyl chloride resin was produced by vacuum forming as shown in Fig. 14. In the substrate obtained, the open angle of U-shaped cross section in the cell wall was 60 degrees, the base portion clearance was 2.0 mm, and the top portion clearance was 0.1 mm. The cell is honeycomb-shaped, 4 mm² square in area, 1.3 mm in height and 7.5 mm³ in volume.

### Example 1

The dispersion liquid A of the dispersion examples was filled into each cell of the substrate A with the cell walls of the substrate examples. The vinyl chloride substrate having 0.1 mm in thickness (face substrate) was then adhered to the other surface of the substrate (rear substrate) with an adhesive agent. The adhesive agent was filled therearound to produce a magnetic display panel.

### Example 2

The dispersion liquid A was filled into the substrate B (rear substrate) with the cell walls of the substrate examples, as in Example 1. The vinyl chloride substrate (face substrate) was then adhered thereto with the adhesive agent. The adhesive agent was filled therearound to produce a magnetic display panel.

### Comparative Example 1

The dispersion liquid A was filled into each cell of the substrate C (rear substrate) with the cell walls of the substrate examples, as in Example 1. The vinyl chloride substrate (face substrate) was then adhered thereto with the adhesive agent. The adhesive agent was filled therearound to produce a magnetic display panel.

### Comparative Example 2

The dispersion liquid B was filled into each cell of the substrate C (rear substrate) with the cell walls of the substrate examples, as in Example 1. The vinyl chloride substrate (face substrate) was then adhered thereto with the adhesive agent. The adhesive agent was filled therearound.to produce a magnetic display panel.

The magnetic panels produced as described above were evaluated for display status. A line written on a face substrate or a rear substrate using a magnetic pen having a stick type ferrite permanent magnet (2.5 mm in diameter, 5 mm in length) with 1300 gauss was visibly observed from a distance of 30 cm. The evaluated result is represented by ⓞ, ○ or X. ⓞ means that a black line is displayed distinctly against a white background with an excellent contrast and no broken line, O means that a black line is displayed distinctly against a white background with excellent contrast and dimly a broken line but suitable for practical use, and X means that the black line is broken or blurred, and not displayed distinctly against a white background with low cover and resolution. The results are shown in Table 1.

| | Open angle | Base portion (mm) | Top portion clearance (mm) | Cell Volume (m³) | Magnetic particles parts by weight | display status | |
|---|---|---|---|---|---|---|---|
| | | | | | | face substrate side | rear substrate side |
| Example 1 | 0 | 0.1 | 0.1 | 12.5 | 20 | ⓞ | ⓞ |
| Example 2 | 20 | 1.0 | 0.1 | 11.0 | 20 | ⓞ | ○ |
| Comparative Example 1 | 60 | 2.0 | 0.1 | 7.5 | 20 | X | X |
| Comparative Example 2 | 60 | 2.0 | 0.1 | 7.5 | 12 | X | X |
| Note: The amount of magnetic particles is represented in the table as parts by weight per 100 parts by weight of white liquid. | | | | | | | |

The open angle is 60 degrees and the base portion clearance is 2.0 mm in Comparative Example 1. Accordingly, the bottom portion of the cell is narrowed, resulting in a small cell volume. If the same amount of magnetic particles as in Example 1 is added thereto, the thickness of the white layer is reduced as compared with the thickness of the magnetic particle layer because of the narrowed bottom portion of the cell shape, and thereby the coverage of the display at the face substrate side is reduced. In addition, the distance from the magnetic pen to the magnetic particle layer becomes too close due to the thicker magnetic particle layer. Thereby, many magnetic particles become easy to attract, resulting in low resolution of the written line. In the case of a display at the rear substrate side, the written line is broken due to the wide base portion clearance.

In Comparative Example 2, the amount of the magnetic particles is reduced in consideration of the resolution of the written line. In case of a display at the face substrate side, it is difficult for the magnetic particles to respond to scanning by the magnetic pen thus causing a broken line.

As is apparent from the above results, a distinct and continuous written line is obtained when the cell walls for use with the present invention have U-shaped cross sections formed by bending and standing partially one or both of said face substrate and said rear substrate, and when the U-shaped cross section clearance of each cell wall, the base portion clearance and the top portion clearance are within predetermined ranges, respectively.

According to the present invention, the cell walls having U-shaped cross sections are formed by bending and standing partially one or both of the face substrate and the rear substrate, and the U-shaped cross section clearance of each cell wall, the base portion clearance and the top portion clearance are within predetermined ranges, respectively. Thereby, a distinct continuous display can be constantly obtained when writing on whichever side of the substrate.

## Claims

1. A method of forming a magnetic display panel comprising:
preparing a substrate (G), a mold (A) having a wall portion (B), a ventilating member (D) and a vacuum plate (F);
placing the substrate onto the mold which is positioned on the ventilating member which is placed on the vacuum plate;
and applying vacuum under the ventilating member whereby a wall is formed on the substrate.

2. A method of forming a magnetic display panel according to claim 1 wherein said method further comprises making the mold having holes (C) by pressing.

3. A method of forming a magnetic display panel according to claim 2, wherein said holes of the mold have a honeycomb, rectangle, wave-like, triangular, or circular shape.

4. A method of forming a magnetic display panel according to any one of claims 1 to 3, wherein a cell forming opening surface of a vacuum forming apparatus where a suction device is connected to said vacuum plate is coated with a synthetic resin, wherein a vacuum forming is applied to said substrate to form said substrate having cell walls, and wherein said substrate having cell walls and a substrate having no cell walls are adhered with an adhesive agent.

5. A magnetic display panel when made by a method as claimed in any one of claims 1 to 4 and comprising:
a face substrate (1);
a rear substrate (2); and
a cell wall (4) which is formed on at least one of the face substrate and the rear substrate, wherein
said cell wall (4) comprises a U-shaped cross section having an open angle, a base portion clearance and a top portion clearance, wherein
said open angle is 0 to 20 degrees, said base portion clearance is 0.1 mm to 1.0 mm, and said top portion clearance is 0 to 1.0 mm.

6. A magnetic display panel according to claim 5 wherein a plurality of cell walls (4) are formed on at least one of the face and rear substrates (1,2) and a rough surface is formed on said substrate between said cell walls.

7. A magnetic display panel according to claim 5 or claim 6 wherein a protective sheet (2b) is disposed on said substrate.

8. A magnetic display panel according to any one of claims 5 to 7, wherein said wall which is formed on the face substrate further comprises an outer top portion (8) which contacts the rear substrate.

9. A magnetic display panel according to any one of claims 5 to 8, wherein said wall which is formed on the rear substrate further comprises an outer top portion (8) which contacts the face substrate.

10. A magnetic display panel according to any one of claims 5 to 9, wherein said cell wall (4) is formed on each of the face substrate and the rear substrate.

## Patentansprüche

1. Verfahren zur Formung einer magnetischen Anzeigetafel, umfassend:
Vorbereiten eines Substrats (G), einer Form (A) mit einem Wandteil (B), eines Lüftungselements (D) und einer Vakuumplatte (F);
Anordnen des Substrats auf der Form, die auf dem Lüftungselement positioniert ist, das auf der Vakuumplatte angeordnet ist; und Anlegen von Vakuum unter dem Lüftungselement, wodurch an dem Substrat eine Wand gebildet wird.

2. Verfahren zur Formung einer magnetischen Anzeigetafel nach Anspruch 1, wobei das Verfahren ferner umfasst, die Form durch Pressen mit Löchern (C) herzustellen.

3. Verfahren zur Formung einer magnetischen Anzeigetafel nach Anspruch 2, wobei die Löcher der Form einen Bienenwabenform, eine rechteckige, eine wellenartige, eine dreieckige oder eine kreisförmige Form haben.

4. Verfahren zur Formung einer magnetischen Anzeigetafel nach einem der Ansprüche 1 bis 3, worin eine Zellenformungsöffnungsfläche einer Vakuumformungsvorrichtung, wo eine Saugvorrichtung mit der Vakuumplatte verbunden ist, mit einem Kunstharz beschichtet ist, worin eine Vakuumformung auf das Substrat ausgeübt wird, um das Substrat mit Zellwänden zu formen, und worin das Substrat mit Zellwänden und ein Substrat ohne Zellwände mit einem Klebstoff verklebt werden.

5. Magnetische Anzeigetafel, wenn hergestellt durch ein Verfahren nach einem der Ansprüche 1 bis 4, und umfassend:
ein vorderes Substrat (1);
ein hinteres Substrat (2); und
eine Zellwand (4), die an dem vorderen Substrat oder/und dem hinteren Substrat ausgebildet ist, worin
die Zellwand (4) einen U-förmigen Querschnitt mit einem Öffnungswinkel, einem Basisteilabstand und einem Oberteilabstand umfasst, worin
der Öffnungswinkel 0 bis 20 Grad beträgt, der Basisteilabstand 0,1 mm bis 1,0 mm beträgt und der Oberteilabstand 0 bis 1,0 mm beträgt.

6. Magnetische Anzeigetafel nach Anspruch 5, worin eine Mehrzahl der Zellwände (4) an dem vorderen oder/und hinteren Substrat (1, 2) ausgebildet ist und eine raue Oberfläche auf dem Substrat zwischen den Zellwänden ausgebildet ist.

7. Magnetische Anzeigetafel nacch Anspruch 5 oder Anspruch 6, worin auf dem Substrat eine Schutzschicht (2b) angeordnet ist.

8. Magnetische Anzeigetafel nach einem der Ansprüche 5 bis 7, worin die Wand, die an dem vorderen Substrat ausgebildet ist, ferner einen äußeren oberen Teil (8) aufweist, der das hintere Substrat kontaktiert.

9. Magnetische Anzeigetafel nach einem der Ansprüche 5 bis 8, worin die Wand, die an dem hinteren Substrat ausgebildet ist, ferner einen äußeren oberen Teil (8) aufweist, der das vordere Substrat kontaktiert.

10. Magnetische Anzeigetafel nach einem der Ansprüche 5 bis 9, worin die Zellwand (4) jeweils an dem vorderen Substrat und dem hinteren Substrat ausgebildet ist.

## Revendications

1. Procédé de formation d'un panneau d'affichage magnétique comprenant :
la préparation d'un substrat (G), d'un moule (A) comportant une partie (B) formant paroi, d'un élément (D) de ventilation et d'une plaque (F) de formation de vide ;
le placement du substrat sur le moule qui est placé sur l'élément de ventilation lequel est placé sur la plaque de formation de vide ;
et l'application d'un vide sous l'élément de ventilation, ce par quoi une paroi est formée sur le substrat.

2. Procédé de formation d'un panneau d'affichage magnétique selon la revendication 1, dans lequel ledit procédé comprend en outre l'étape de réalisation, par pressage, du moule comportant des trous (C).

3. Procédé de formation d'un panneau d'affichage magnétique selon la revendication 2, dans lequel lesdits trous du moule ont une forme alvéolaire, rectangulaire, de type onde, triangulaire, ou circulaire.

4. Procédé de formation d'un panneau d'affichage magnétique selon l'une quelconque des revendications 1 à 3, dans lequel une cellule formant une surface ouverte d'un dispositif de formation de vide, où un dispositif d'aspiration est raccordé à ladite plaque de formation de vide, est enduite de résine synthétique, dans lequel on applique un vide audit substrat pour former ledit substrat comportant des parois de cellule, et dans lequel on colle, à l'aide d'un agent adhésif, ledit substrat comportant des parois de cellule et un substrat ne comportant pas de parois de cellule.

5. Panneau d'affichage magnétique lorsqu'on le fabrique par le procédé selon l'une quelconque des revendications 1 à 4, et comprenant :
un substrat avant (1) ;
un substrat arrière (2) ; et
une paroi (4) de cellule qui est formée sur au moins l'un du substrat avant et du substrat arrière, dans lequel
ladite paroi (4) de cellule comprend une section transversale en forme de U ayant un angle ouvert, un dégagement de partie de base et un dégagement de partie supérieure, dans lequel
ledit angle ouvert est de 0 à 20 degrés, ledit dégagement de partie de base est de 0,1 mm à 1,0 mm, et ledit dégagement de partie supérieure est de 0 à 1,0 mm.

6. Panneau d'affichage magnétique selon la revendication 5, dans lequel une pluralité de parois (4) de cellule est formée sur au moins l'un des substrats avant et arrière (1, 2), et dans lequel une surface rugueuse est formée sur ledit substrat entre lesdites parois de cellule.

7. Panneau d'affichage magnétique selon la revendication 5 ou la revendication 6, dans lequel on dispose une feuille (2b) de protection sur ledit substrat.

8. Panneau d'affichage magnétique selon l'une quelconque des revendications 5 à 7, dans lequel ladite paroi qui est formée sur le substrat avant comprend en outre une partie supérieure extérieure (8) qui contacte le substrat arrière.

9. Panneau d'affichage magnétique selon l'une quelconque des revendications 5 à 8, dans lequel ladite paroi qui est formée sur le substrat arrière comprend en outre une partie supérieure extérieure (8) qui contacte le substrat avant.

10. Panneau d'affichage magnétique selon l'une quelconque des revendications 5 à 9, dans lequel ladite paroi (4) de cellule est formée sur chacun du substrat avant et du substrat arrière.
